# EUROPEAN PATENT SPECIFICATION

(11) **EP 3 193 046 B1**
(45) Date of publication and mention of the grant of the patent: **09.05.2018**
(21) Application number: 17382008.5
(22) Date of filing: 12.01.2017
(51) Int. Cl.: F16K 1/30, A62C 35/68, F16K 11/10, F16K 15/02, F16K 27/02

(54) **ONE-WAY CHECK VALVE WITH SEVERAL INLETS**
EINWEGVENTIL MIT MEHREREN EINLÄSSE
CLAPET ANTIRETOUR AVEC PLUSIEURS ENTRÉES

(30) Priority: 15.01.2016 ES 201630036
(43) Date of publication of application: 19.07.2017
(73) Proprietor: Airfire Woldwide, S.L., 08004 Barcelona (ES)
(72) Inventor: Marqués Caules, Joan, 08004 Barcelona (ES); Muttoni Soutric, Stefano, 08004 Barcelona (ES); Andreu Solà, Sergi, 08004 Barcelona (ES)
(74) Representative: Capitán García, Maria Nuria

(56) References cited:
- EP-A2- 2 833 037
- JP-A- S58 166 178
- US-A- 2 959 188
- US-A- 3 805 825
- US-A- 4 827 972

## Description

### TECHNICAL FIELD OF THE INVENTION

This invention relates to a one-way check valve with several inlets for fluids.

### BACKGROUND OF THE INVENTION

Tanks of extinguishing gas currently used in centralised fire fighting facilities, which are provided with a bank of bottles that discharge simultaneously, have one-way check valves on each tank that allow circulation of the gas outwards and prevent it from returning inside the other tanks. The check valve on each bottle must be connected to a manifold that joins the flow of gas during discharge to be directed towards the pipe for its subsequent discharge in the room to be protected, located above said bottles via hoses provided in a vertical position and coupled at their ends to the manifold and the opening and closing valve of the corresponding tank.

All types of bank of fire extinguishing gas tanks require the use of a manifold pipe with the same number of inlets as tanks in the system and therefore, the use of a check valve for each tank.

The problem to be solved is therefore the development of a one-way check valve that can operate in any position and that allows reducing, simplifying or removing the manifold and the elements currently present in each individual outlet, reducing the extra work, accessories and leakage points and also eliminating elements when possible. The document US4,827,972 discloses a one-way check valve with several inlets for fluids comprising a body,wherein said body, in which at least two inlet ducts are provided which converge into a central cavity from which there is a single outlet duct for communication with the outside of the valve, each inlet duct comprising a first cavity from one side of the valve to the start of a second cavity as an extension of the first and of a smaller diameter that reaches the central cavity, with a helicoidal spring provided in the first cavity which rests on one end and on the other end against a seal, the seal comprising a frustoconical portion the side of which rests against a closing washer due to the action of the spring when the pressure of the fluid is lower than the force of the spring.

US3,805,825 shows a prior art valve which additionally discloses the arrangement of the spring with one end resting against the face contiguous to the second cavity.

### DESCRIPTION OF THE INVENTION

The present invention is established and characterised in the independent claims, while the dependent claims describe additional characteristics thereof.

The subject matter of the invention is a one-way check valve for fluids to which several fluid inlets can be connected that converge into a single outlet. The technical problem to be solved is how to design the valve with its components to achieve the subject matter proposed.

By "inlets" we refer to any kind of duct that introduces fluid into the valve. In particular these might be ducts as disclosed in the invention.

One advantage of the valve is that it is a single piece, which makes it easy to handle and assemble as well as occupying very little space.

Another advantage is that by integrating it into a single body leaks are prevented when compared to many connections with many valves, where each connection is a potential point for leaks.

Another advantage is that it can operate in any position, not only vertical but in any spatial orientation.

### DESCRIPTION OF THE FIGURES

This specification is supplemented with a set of drawings illustrating the preferred embodiment, which are never intended to limit the invention.
Figure 1 shows a cross-section view of the valve.
Figure 2 shows a perspective view of the valve.
Figure 3 shows a perspective view of the seal.
Figures 4 to 7 represent cross-section views of different configurations of the valve with two, three, four and five inlets respectively.
Figure 8 shows a perspective view of connected fluid tanks and the corresponding hoses connected to the valve.

### DETAILED DESCRIPTION OF THE INVENTION

An embodiment of the invention is described below with reference to the figures.

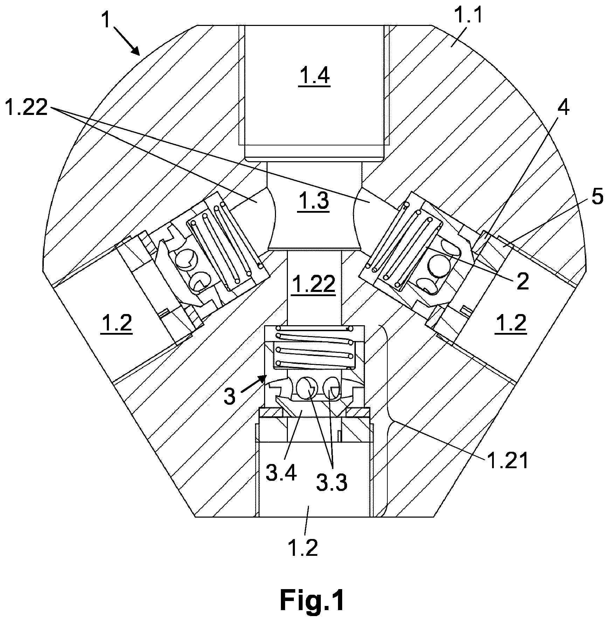

Figure 1 shows a one-way check valve (1) with several inlets for fluids, both liquids and gases, comprising a body (1.1), usually made from solid metal, in which at least two inlet ducts (1.2) for fluids are provided, usually by machining, which converge into a central cavity (1.3) from which there is a single outlet duct (1.4) for communication with the outside of the valve (1), each inlet duct (1.2) comprising a first cavity (1.21) from one side of the valve (1) to the start of a second cavity (1.22) as an extension of the first (1.21) and with a smaller diameter that reaches the central cavity (1.3), with a helicoidal spring (2) provided in the first cavity (1.21) which rests on one end against the face contiguous to the second cavity (1.22) and on the other end against a seal (3), the spring (2) being housed inside the seal (3), which comprises through openings (3.3) and a frustoconical portion (3.4) the side (3.41) of which rests against a closing washer (4) due to the action of the spring (2) when the pressure of the fluid is lower than the force of the spring, the closing washer (4) thus being retained by a retaining washer (5) provided next to it such that it retains the fluid independently in each inlet duct (1.2).

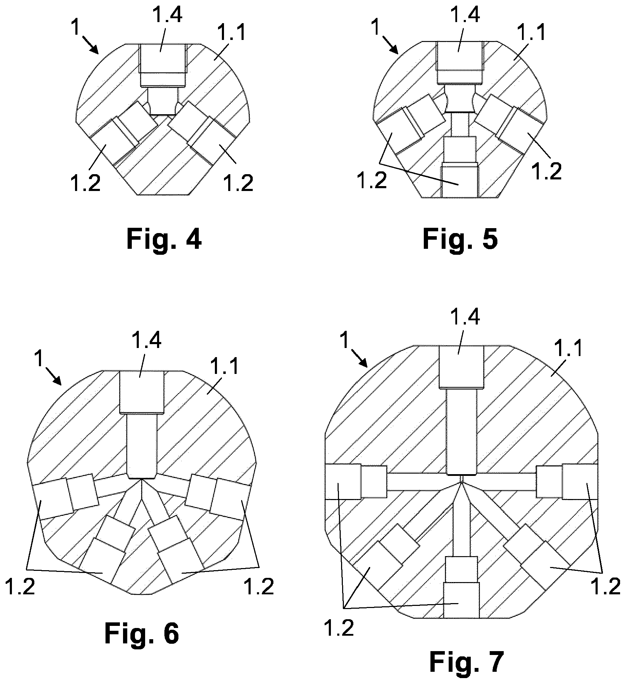

That is, with regard to the operation of the valve (1) we can highlight that each inlet duct (1.2) with their corresponding seal (3), spring (2), closing washer (4) and retaining washer (5) operates independently, retains the fluid independently; that is, it is only necessary for fluid to enter through one of the inlet ducts (1.2) for it to work as disclosed and for fluid to exit via the outlet duct (1.4). Likewise, fluid may enter via more than one of the inlet ducts (1.2) and independently from their arrangement, for example, in a valve (1) with three inlet ducts (1.2), figures 1, 2 and 5, fluid may enter via the first and the third ducts or the second and the third ducts. However much fluid pressure there is, the fluid will always flow from the duct it is entering towards the outlet, and will never enter through another inlet duct (1.2) since this is prevented by the retention provided by the seal (3) closed via the closing washer (4).

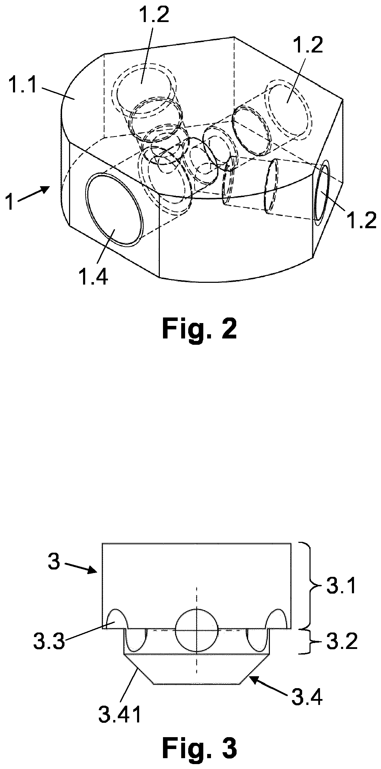

As shown in figures 1 and 3, the seal (3) comprises a greater area (3.1) with a diameter adjusted to the corresponding diameter of the first cavity (1.21) such that the fluid may only advance through the openings (3.3) and through the inside of the seal (3) when the pressure of the fluid is greater than the resistance offered by the spring (2), and a smaller area (3.2) following the greater area with a smaller diameter than the latter.

As shown in figure 3, the openings (3.3) of the seal can be provided between the greater area (3.1) and the smaller area (3.2) in order to favour the flow of fluid through them, and they may also be perpendicular to the longitudinal axis of the seal (3).

Preferably, the closing washer (4) is made from rubber, to guarantee the seal.

Optionally, as shown in figures 2 and 3, the inlet ducts (1.2), the central cavity (1.3), the outlet duct (1.4) and the seal (3) have a circular cross-section, such that machining is simple and favours the flow of fluids.

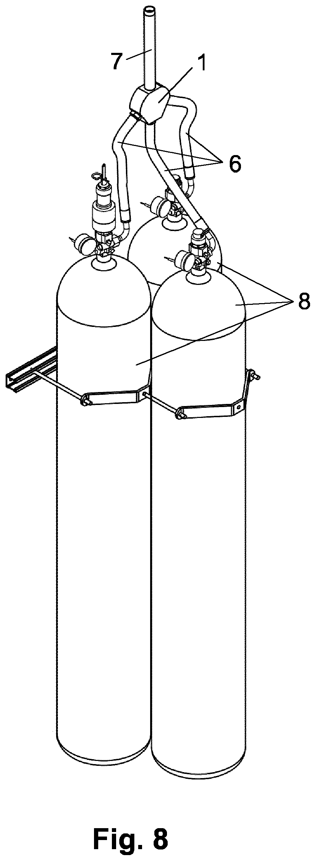

Optionally, as shown in the figures, the peripheral areas of the body (1.1) corresponding to the inlet ducts (1.2) and to the outlet duct (1.4) are flat sides and said ducts have a threaded portion, favouring the threading of hoses, both incoming (6) and outgoing (7), as shown in figure 8, which shows an installation of the valve (1) with gas tanks (8) as fluid, which may be in either liquid or gas form.

## Claims

1. One-way check valve (1.1) with several inlets for fluids comprising a body (1.1), wherein said body (1.1) is in solid metal, in which at least two inlet ducts (1.2) are provided which converge into a central cavity (1.3) from which there is a single outlet duct (1.4) for communication with the outside of the valve (1), each inlet duct (1.2) comprising a first cavity (1.21) from one side of the valve (1) to the start of a second cavity (1.22) as an extension of the first (1.21) and of a smaller diameter that reaches the central cavity (1.3), with a helicoidal spring (2) provided in the first cavity (1.21) which rests on one end against the face contiguous to the second cavity (1.22) and on the other end against a seal (3), the spring (2) being housed inside the seal (3), which comprises through openings (3.3) and a frustoconical portion (3.4) the side (3.41) of which rests against a closing washer (4) due to the action of the spring (2) when the pressure of the fluid is lower than the force of the spring, the closing washer (4) thus being retained by a retaining washer (5) provided next to it such that it retains the fluid independently in each inlet duct (1.2).

2. Valve according to claim 1, wherein the seal (3) comprises a greater area (3.1) the diameter of which is adjusted to the corresponding diameter of the first cavity (1.21) such that the fluid may only advance through the openings (3.3) and through the inside of the seal (3) when the pressure of the fluid is greater than the resistance offered by the spring (2), and a smaller area (3.2) following the greater area and with a smaller diameter than the latter.

3. Valve according to claims 1 or 2 wherein the openings (3.3) of the seal are provided between the greater area (3.1) and the smaller area (3.2).

4. Valve according to any of the previous claims wherein the openings (3.3) are perpendicular to the longitudinal axis of the seal (3).

5. Valve according to claim 1 wherein the body (1.1) is made from metal.

6. Valve according to claim 1 wherein the closing washer (4) is made from rubber.

7. Valve according to claim 1 wherein the inlet ducts (1.2), the central cavity (1.3), the outlet duct (1.4) and the seal (3) have a circular cross-section.

8. Valve according to claim 1 wherein the peripheral areas of the body (1.1) corresponding to the inlet ducts (1.2) and to the outlet duct (1.4) are flat sides and said ducts have a threaded portion.

## Patentansprüche

1. Einwegventil (1.1) mit mehreren Einlässen für Fluide, umfassend einen Körper (1.1), wobei der Körper (1.1) aus massivem Metall besteht, in dem mindestens zwei Einlasskanäle (1.2) vorgesehen sind, die zu einem zentralen Hohlraum (1.3) zusammenlaufen, von dem ein einziger Auslasskanal (1.4) zur Verbindung mit der Außenseite des Ventils (1) vorhanden ist, wobei jeder Einlasskanal (1.2) einen ersten Hohlraum (1.21) von einer Seite des Ventils (1) bis zum Anfang eines zweiten Hohlraums (1.22) als eine Verlängerung des ersten (1.21) und mit einem kleineren Durchmesser umfasst, der den zentralen Hohlraum (1.3) erreicht, wobei in dem ersten Hohlraum (1.21) eine Spiralfeder (2) vorgesehen ist, die an einem Ende gegen die Fläche angrenzend an den zweiten Hohlraum (1.22) und am anderen Ende gegen eine Dichtung (3) aufliegt, wobei die Feder (2) innerhalb der Dichtung (3) untergebracht ist, welche Durchgangsöffnungen (3.3) und einen kegelstumpfförmigen Abschnitt (3.4) umfasst, dessen Seite (3.41) infolge der Wirkung der Feder (2) gegen eine Dichtungsscheibe (4) anliegt, wenn der Druck des Fluids niedriger als die Kraft der Feder ist, wobei die Dichtungsscheibe (4) somit von einer neben ihr vorgesehenen Haltescheibe (5) gehalten wird, so dass sie das Fluid unabhängig voneinander in jedem Einlasskanal (1.2) zurückhält.

2. Ventil nach Anspruch 1, wobei die Dichtung (3) einen größeren Bereich (3.1), dessen Durchmesser an den entsprechenden Durchmesser des ersten Hohlraumes (1.21) angepasst ist, so dass das Fluid nur durch die Öffnungen (3.3) und durch das Innere der Dichtung (3) hindurchtreten kann, wenn der Druck des Fluids größer ist als der von der Feder (2) gebotene Widerstand, und einen kleineren Bereich (3.2) anschließend an den größeren Bereich umfasst, der einen kleineren Durchmesser als der Letztere hat.

3. Ventil nach den Ansprüchen 1 oder 2, wobei die Öffnungen (3.3) der Dichtung zwischen dem größeren Bereich (3.1) und dem kleineren Bereich (3.2) vorgesehen sind.

4. Ventil nach einem der vorhergehenden Ansprüche, wobei die Öffnungen (3.3) senkrecht zur Längsachse der Dichtung (3) sind.

5. Ventil nach Anspruch 1, wobei der Körper (1.1) aus Metall besteht.

6. Ventil nach Anspruch 1, wobei die Dichtungsscheibe (4) aus Kautschuk besteht.

7. Ventil nach Anspruch 1, wobei die Einlasskanäle (1.2), der zentrale Hohlraum (1.3), der Auslasskanal (1.4) und die Dichtung (3) einen kreisförmigen Querschnitt aufweisen.

8. Ventil nach Anspruch 1, wobei die Umfangsbereiche des Körpers (1.1), die den Einlasskanälen (1.2) und dem Auslasskanal (1.4) entsprechen, flache Seiten sind und die Kanäle einen Gewindeabschnitt aufweisen.

## Revendications

1. Clapet anti-retour unidirectionnel (1.1) comprenant plusieurs entrées pour des fluides, comprenant un corps (1.1), dans lequel ledit corps (1.1) est en métal plein, dans lequel au moins deux conduits d'entrée (1.2) sont prévues, qui convergent dans une cavité centrale (1.3) à partir de laquelle il existe un conduit de sortie unique (1.4) destiné à une communication avec l'extérieur du clapet (1), chaque conduit d'entrée (1.2) comprenant une première cavité (1.21) depuis un côté du clapet (1) vers le début d'une deuxième cavité (1.22) sous forme de prolongement de la première (1.21) et de diamètre inférieur, qui atteint la cavité centrale (1.3), avec un ressort hélicoïdal (2) prévu dans la première cavité (1.21) qui repose sur une extrémité contre la face attenante à la deuxième cavité (1.22) et sur l'autre extrémité contre un joint (3), le ressort (2) étant logé à l'intérieur du joint (3), qui comprend des orifices traversants (3.3) et une partie tronconique (3.4) dont le côté (3.41) repose contre une rondelle de fermeture (4) en raison de l'action du ressort (2) lorsque la pression du fluide est inférieure à la force du ressort, la rondelle de fermeture (4) étant ainsi retenue par une rondelle de retenue (5) prévue à côté d'elle, de manière à ce qu'elle retienne le fluide indépendamment dans chaque conduit d'entrée (1.2).

2. Clapet selon la revendication 1, dans lequel le joint (3) comprend une zone plus grande (3.1) dont le diamètre est ajusté par rapport au diamètre correspondant de la première cavité (1.21), de sorte que le fluide puisse avancer uniquement à travers les orifices (3.3) et à travers l'intérieur du joint (3) lorsque la pression du fluide est supérieure à la résistance offerte par le ressort (2) et une zone plus petite (3.2) à la suite de la zone plus grande et avec un diamètre inférieur à cette dernière.

3. Clapet selon les revendications 1 ou 2, dans lequel les orifices (3.3) du joint sont prévus entre la zone plus grande (3.1) et la zone plus petite (3.2).

4. Clapet selon l'une quelconque des revendications précédentes, dans lequel les orifices (3.3) sont perpendiculaires à l'axe longitudinal du joint (3).

5. Clapet selon la revendication 1, dans lequel le corps (1.1) est constitué de métal.

6. Clapet selon la revendication 1, dans lequel la rondelle de fermeture (4) est constituée de caoutchouc.

7. Clapet selon la revendication 1, dans lequel les conduits d'entrée (1.2), la cavité centrale (1.3), le conduit de sortie (1.4) et le joint (3) ont une section transversale circulaire.

8. Clapet selon la revendication 1, dans lequel les zones périphériques du corps (1.1) correspondant aux conduits d'entrée (1.2) et au conduit de sortie (1.4) sont des côtés plats et lesdits conduits ont une partie filetée.
